# NEUE EUROPÄISCHE PATENTSCHRIFT

(11) **EP 1 436 874 B2**
(45) Veröffentlichungstag und Bekanntmachung des Hinweises auf die Entscheidung über den Einspruch: **26.02.2014**
(45) Hinweis auf die Patenterteilung: 20.07.2005
(21) Anmeldenummer: 02801284.7
(22) Anmeldetag: 14.08.2002
(51) Int. Cl.: H02H 9/00, H02J 1/10

(54) **VORRICHTUNG ZUR EIGENSICHEREN REDUNDANTEN STROM-SPANNUNGSVERSORGUNG**
INTRINSICALLY SECURE DEVICE FOR SUPPLYING REDUNDANT CURRENT-VOLTAGE
DISPOSITIF D'ALIMENTATION COURANT-TENSION REDONDANTE, A SECURITE INTRINSEQUE

(30) Priorität: 16.10.2001 DE 10152653
(43) Veröffentlichungstag der Anmeldung: 14.07.2004
(73) Patentinhaber: Pepperl + Fuchs GmbH, 68307 Mannheim (DE)
(72) Erfinder: JUNKER, Martin, 64291 Darmstadt (DE)
(74) Vertreter: Heim, Hans-Karl
(86) Internationale Anmeldenummer: PCT/EP2002/009142
(87) Internationale Veröffentlichungsnummer: WO 2003/034564

(56) Entgegenhaltungen:
- EP-A- 0 666 631
- US-A- 4 882 501

## Beschreibung

Die vorliegende Erfindung betrifft eine Vorrichtung zur eigensicheren redundanten Strom-Spannungsversorgung für einen oder mehrere elektrische Verbraucher in einem explosionsgeschützten Bereich (Zone 0) nach dem Oberbegriff des Patentanspruches 1.

Eine gattungsgemäße Vorrichtung weist mindestens zwei Versorgungskreise zur Bereitstellung der Strom/Spannungsversorgung und eine Schutzeinrichtung zur eigensicheren Leistungsbegrenzung des von den Versorgungskreisen dem Verbraucher im explosionsgeschützten Bereich zugeführten Stroms auf, wobei die Versorgungskreise als Teil der Schutzeinrichtung jeweils Einrichtungen zur Stromregelung und/oder -begrenzung aufweisen.

Derartige Vorrichtungen sind bekannt und werden bei Anlagen eingesetzt, bei denen Teile der Betriebsmittel im explosionsgeschützten Bereich betrieben werden. Die Versorgungsvorrichtungen können in Ein-/Ausgabebausteine integriert sein, und als Bindeglied zwischen einer externen Recheneinheit einer speicherprogrammierbaren Steuerung und Sensoren und/oder Aktuatoren im explosionsgeschützten Bereich angesehen werden.

In EP 0 666 631 A2 ist eine gattungsgemäße Vorrichtung beschrieben, bei der zum Anschluss einer Vielzahl von Feldgeräten und zu deren freizügiger Manipulation bei gewährleisteter Eigensicherheit mit minimalem Verkabelungsaufwand die Mittel zur Strom- und Spannungsbegrenzung räumlich getrennt angeordnet und über einen nicht eigensicheren Stromkreis miteinander verbunden sind. Kommunikation und Speisung der angeschlossenen Feldgeräte erfolgt dabei über dasselbe Aderpaar.

Eine andere Möglichkeit, die Überlastung einer Versorgungsleitung zu vermeiden, ist in US-4,882,501 offenbart. Dieses Dokument betrifft eine Anordnung zur Spannungsversorgung für elektrohydraulische Steuersysteme, bei der mehrere Steuerkreise von einer gemeinsamen Spannungsquelle gespeist werden. Der von jedem einzelnen Steuerkreis aktuell aufgenommene Strom wird gemessen und eine Recheneinrichtung stellt die in den einzelnen Steuerkreisen ablaufenden Prozesse zeitlich zueinander so ein, dass die gemeinsame Spannungsquelle nicht überlastet wird.

Betriebsmittel in Anlagenteilen, die als explosionsgeschützter Bereich deklariert sind, müssen bestimmte Anforderungen erfüllen, die in der europäischen Norm EN 500 20 niedergelegt sind.

Eine in EN 500 20 aufgeführte Möglichkeit, Betriebsmittel im explosionsgefährdeten Bereich zu betreiben, ist die sogenannte "Eigensicherheit". Hierbei wird die zugeführte Energie so begrenzt, dass kein zündfähiger Funke entstehen kann.

Um die Energie zu begrenzen, müssen sowohl Strom als auch Spannung begrenzt werden. Die Möglichkeiten, dies im Einzelnen zu realisieren, sind ebenfalls durch die EN 500 20 geregelt.

Bezüglich des explosionsgefährdeten Bereichs ist in Europa die Unterscheidung in sogenannte Zonen üblich. Unterschieden werden hier Zone 0, Zone 1 und Zone 2, wobei sich die schärfsten Anforderungen für Zone 0 ergeben, da hier von einer permanent explosionsfähigen Atmosphäre ausgegangen wird. In diesem Bereich ist ausschließlich eine resistive Begrenzung des Stroms gestattet. Es werden also lediglich Widerstände, jedoch keine elektronischen Begrenzungen zur Strombegrenzung anerkannt. Das heißt, dass bei einem Ein-/Ausgabebaustein, bei dem ein Strom im explosionsgeschützten Bereich in Zone 0 geführt werden soll, dieser Strom durch einen oder mehrere Widerstände begrenzt werden muss, wobei der oder die Widerstände ebenfalls bestimmte Voraussetzungen zu erfüllen haben.

Die Funktionalität oder Verfügbarkeit von Ein-/Ausgabebausteinen lässt sich auch im explosionsgeschützten Bereich erheblich vergrößern, wenn diese redundant versorgt werden. Das heißt, der Stromkreis im explosionsgeschützten Bereich (Zone 0,1 oder 2), welcher auch als Feldkreis bezeichnet wird, ist an wenigstens zwei Versorgungskreise gleicher Funktion angeschlossen, wobei ein Versorgungskreis aktiv und der zweite Versorgungskreis in Bereitschaft ist. Tritt in der aktiven Vorrichtung ein Fehler auf, so kann automatisch eine Umschaltung auf das zweite Gerät erfolgen, ohne dass es zu einer signifikanten Störung des Prozesses kommt.

Auch bei einer solchen redundanten Versorgung von Ein/Ausgabebausteinen im explosionsgeschützten Bereich müssen selbstverständlich die jeweiligen Sicherheitserfordernisse erfüllt werden, beispielsweise das Sicherheitsniveau der "Eigensicherheit". Die Eigensicherheit kann beispielsweise dadurch aufrechterhalten bleiben, dass eine Umschaltung zwischen den beiden Versorgungskreisen ausgeführt wird, so dass jeweils nur ein Versorgungskreis mit dem explosionsgeschützen Bereich verbunden ist. Damit es nicht zu einer fehlerhaften Parallelschaltung der beiden Versorgungskreise kommt, bei welcher die "Eigensicherheit" wegen der Addition der Ströme der beiden Module nicht mehr gegeben wäre, besteht bei dieser Realisierung eine Sicherheitsanforderung an die eingesetzte Umschalteinrichtung. Hierdurch werden zusätzliche Komponenten benötigt, was mit einer Steigerung des konstruktionsmäßigen Aufwands und der Kosten verbunden ist. Die Vorrichtung zur redundanten Strom-Spannungsversorgung selbst kann so ausgelegt sein, dass sie zumindest in Zone 1 oder Zone 2 eingesetzt werden darf.

**Aufgabe** der vorliegenden Erfindung ist es, eine Vorrichtung zur eigensicheren redundanten Strom-Spannungsversorgung anzugeben, bei welcher die relevanten Sicherheitserfordernisse mit besonders einfachen Mitteln erfüllt werden können.

Diese Aufgabe wird durch eine Vorrichtung zur eigensicheren redundanten Strom-Spannungsversorgung mit den Merkmalen des Patentanspruches 1 gelöst.

Vorteilhafte Weiterbildungen der erfindungsgemäßen Vorrichtung sind Gegenstand der Unteransprüche.

Ein Kerngedanke der Erfindung kann darin gesehen werden, dass mittels der Schutzeinrichtung die in den explosionsgeschützten Bereich eingebrachte Leistung, insbesondere der in den explosionsgeschützten Bereich eingebrachte Strom, auch bei festverdrahteten parallel geschalteten Versorgungskreisen auf die für "Eigensicherheit" erforderlichen Werte begrenzt werden kann. Die Redundanz wird also dadurch erzielt, dass die Versorgungskreise in Parallel-Schaltung vorgesehen sind, wobei aufgrund der erfindungsgemäßen Ausbildung ein Stromanstieg über den für "Eigensicherheit" maximal zugelassenen Wert vermieden wird.

Ein wesentlicher Vorteil der erfindungsgemäßen Vorrichtung kann darin gesehen werden, dass, im Unterschied zu den bisher im Stand der Technik realisierten redundanten Versorgungen, auch bei fest angeschlossenen Versorgungskreisen das Sicherheitsniveau "Eigensicherheit" zu jedem Zeitpunkt gewährleistet ist.

Damit zusammenhängend ergibt sich der weitere wesentliche Vorteil, dass ein Sicherheitserfordernis an einer eventuell einzusetzenden Umschalteinrichtung entfallen und der konstruktive Aufwand somit insgesamt gesenkt werden kann.

Die Versorgungskreise können jeweils modulartig aufgebaut sein und werden dann auch als Versorgungsmodule bezeichnet.

Bei einer besonders bevorzugten Weiterbildung der Erfindung weist die Einrichtung zur resistiven Strombegrenzung wenigstens einen ohmschen Widerstand auf.

Bei einer weiteren besonders bevorzugten Ausgestaltung der Erfindung ist zwischen den Versorgungskreisen und den Anschlüssen des Verbrauchers in dem explosionsgeschützen Bereich ein Steckermodul vorgesehen. Hierdurch ergeben sich einerseits vielfältige Anschlussmöglichkeiten, andererseits können eventuell beschädigte oder ausgefallene Module sehr leicht ausgetauscht werden, ohne dass der Betrieb der Vorrichtung unterbrochen werden muss.

Zweckmäßig ist insbesondere die Parallel-Schaltung der Versorgungskreise in dem Steckermodul ausgeführt. Durch diese Maßnahme kann ein Austausch eines Versorgungskreises oder -moduls durch simples Ausstecken des alten und Einstecken des neuen Versorgungskreises oder -moduls erfolgen und weitere Anschlussmaßnahmen sind nicht erforderlich. Vorteilhafterweise ist das Steckermodul insbesondere mit einer Mehrzahl von Steckplätzen für die Versorgungskreise oder -module ausgebildet.

Vorteilhaft kann darüber hinaus insbesondere die Einrichtung zur resistiven Strombegrenzung im Steckermodul zur Begrenzung der Ströme der Versorgungskreise vorgesehen sein. Auf diese Weise können Komponenten der Einrichtung zur resistiven Strombegrenzung aus den Versorgungskreisen ausgelagert werden und diese können somit in ihren Aufbau vereinfacht werden.

Es kann aber auch vorgesehen sein, dass der Widerstand der Einrichtung zur resistiven Strombegrenzung partiell in jedem Versorgungskreis und im Steckermodul vorgesehen ist. Hierdurch kann im Vergleich zu der Ausführungsform, bei der der für die Einrichtung zur resistiven Strombegrenzung wesentliche Widerstand im Steckermodul angeordnet ist, die in dem Steckermodul umgesetzte Leistung reduziert werden.

Es sind aber auch Fälle denkbar, bei denen, beispielsweise aus geometrischen Gründen, das Steckermodul volumenmäßig möglichst klein gehalten werden soll. Hierbei ist eine Ausführung zweckmäßig, bei der zur resistiven Strombegrenzung jedem Versorgungskreis ein entsprechender Widerstand zugeordnet ist.

Um die Komponenten für die Einrichtung zur resistiven Strombegrenzung, insbesondere den oder die ohmschen Widerstände, möglichst klein halten zu können, muss die in diesen Widerständen umgesetzte Leistung so weit wie möglich reduziert werden. Hierzu ist vorgesehen, dass jeder Versorgungskreis als Schutzeinrichtung mindestens eine Einrichtung zur elektronischen Leistungsbegrenzung aufweist.

Erfindungsgemäß ist die Einrichtung zur Leistungsbegrenzung als Stromregelung bzw. - begrenzung ausgebildet und der Strom wird über einen Spannungsabfall an einem Widerstand des Versorgungskreises und/oder beispielsweise einem Widerstand des Steckermoduls erfasst. Da es sich bei Widerständen um sehr zuverlässige, passive Komponenten handelt, kann auf diese Weise eine sehr zuverlässige Begrenzung des Stroms erzielt werden.

Zweckmäßig sind im Hinblick auf die europäische Norm EN 500 20 insbesondere Ausgestaltungen der Erfindung, bei denen die an dem Widerstand der Einrichtung zur resistiven Strombegrenzung abfallende Spannung oder Verlustleistung auf maximal 2/3 der für den Widerstand zulässigen Grenzwerte ausgelegt ist.

Eine weitere Erhöhung der Sicherheit kann erzielt werden, wenn die Einrichtung zur Leistungsbegrenzung mehrfach redundant, insbesondere dreifach redundant, ausgeführt ist.

Selbst bei zwei beliebigen Fehlern oder Ausfällen ist somit die Leistungsbegrenzung gewährleistet.

Bevorzugt ist diesbezüglich außerdem, wenn auch die Einrichtungen zur Leistungsbegrenzung gemäß der Europa-Norm EN 500 20 ausgelegt sind.

Ein in dem Versorgungskreis vorgesehener Widerstand zur Begrenzung des Stroms wirkt nach außen effektiv wie eine Erhöhung des Innenwiderstands einer Spannungsquelle. Um ein unerwünschtes Abfallen der an den Ausgangsanschlüssen der Vorrichtung, insbesondere des Steckermoduls, anliegenden Spannung im Belastungsfall zu vermeiden, kann eine Einrichtung zur Erhöhung der Ausgangsspannung bei Belastung vorgesehen sein. Weiterhin kann hierbei auch eine Einrichtung zur Begrenzung der Ausgangsspannung im Leerlauffall vorgesehen sein.

Zwar ist die erfindungsgemäße Vorrichtung entsprechend dem oben dargelegten Kerngedanken so ausgelegt, dass die in den explosionsgeschützten Bereich eingebrachte Leistung prinzipiell auch bei fest verdrahteten parallel geschalteten Versorgungskreisen auf die für "Eigensicherheit" erforderlichen Werte begrenzt wird. Gleichwohl kann es aber von Vorteil sein, wenn zum Umschalten zwischen den Versorgungskreisen eine Umschalteinrichtung vorgesehen ist. Hierbei kommt als besonderer erfindungsgemäßer Vorteil zum Tragen, dass an eine solche Umschalteinrichtung im Hinblick auf die "Eigensicherheit" der Vorrichtung keinerlei Sicherheitsanforderung gestellt wird und der konstruktions- und kostenmäßige Aufwand daher gering gehalten werden kann.

Mit der erfindungsgemäßen Vorrichtung wird eine zuverlässige eigensichere Strom-Spannungsversorgung für elektrische Verbraucher in einem explosionsgeschützten Bereich bereitgestellt, welche besonders durch die Begrenzung der Leistung nutzbringend als mehrkanalige Ausführung für den Anschluss von z.B. bis zu acht elektrischen Verbrauchern (Sensoren und/oder Aktuatoren) im explosionsgeschützen Bereich, einsetzbar ist. Bei mehrkanaligen Anwendungen wird die erfindungsgemäße Vorrichtung entsprechend mehrfach in einem Gehäuse eingesetzt.

Weitere Vorteile und Eigenschaften der erfindungsgemäßen Vorrichtung werden nachstehend unter Bezugnahme auf die beigefügten schematischen Figuren beschrieben.

Dort zeigen:
- Fig. 1a: ein erstes Ausführungsbeispiel der erfindungsgemäßen Vorrichtung;
- Fig. 1b: den Aufbau einer mehrkanaligen Ausführung der erfindungsgemäßen Vorrichtung;
- Fig. 2: ein zweites Ausführungsbeispiel der erfindungsgemäßen Vorrichtung;
- Fig. 3: ein drittes Ausführungsbeispiel der erfindungsgemäßen Vorrichtung;
- Fig. 4 bis Fig. 6: weitere Ausführungsbeispiele von Vorrichtungen zur eigensicheren redundanten Strom - Spannungsversorgung.

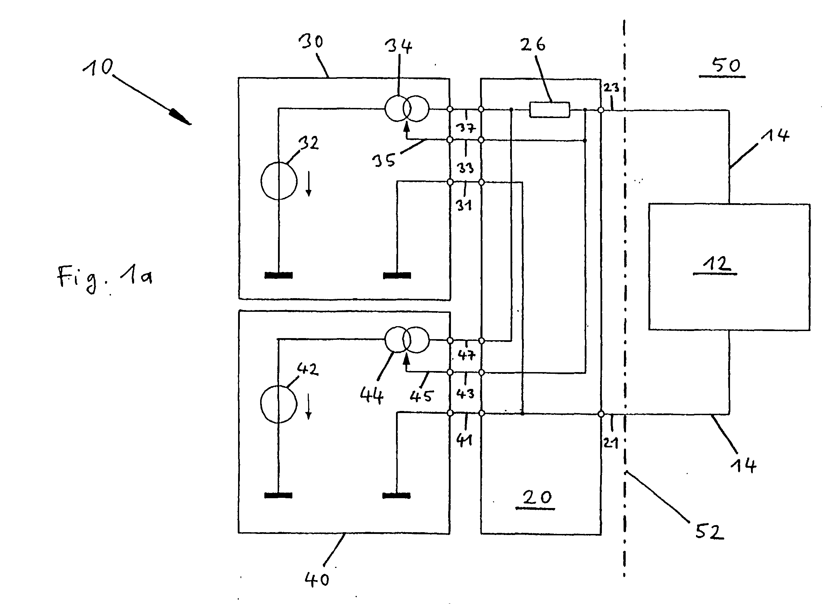

In Fig. 1a ist schematisch ein erstes Ausführungsbeispiel einer erfindungsgemäßen Vorrichtung 10 zur eigensicheren redundanten Strom-Spannungsversorgung für einen elektrischen Verbraucher 12 in einem explosionsgeschützten.Bereich 50 dargestellt. Der explosionsgeschützte Bereich 50 ist in der Zeichnung durch eine gestrichelte Linie 52 abgegrenzt. Zur Strom-Spannungsversorgung des elektrischen Verbrauchers 12 sind zwei Versorgungskreise 30, 40 vorgesehen, welche jeweils eine Spannungsquelle 32, 42 aufweisen. Wenn ein noch höherer Grad an Versorgungssicherheit gewünscht ist, können selbstverständlich auch mehr als zwei Versorgungskreise eingesetzt werden. Über eine Mehrzahl von Steckverbindungen 31, 33, 37 bzw. 41, 43, 47 sind die Versorgungskreise 30, 40 mit einem Steckermodul 20 verbunden. Innerhalb des Steckermoduls 20 ist eine Parallelschaltung der Versorgungskreise 30, 40 realisiert und über Steckverbindungen 21, 23 wird eine elektrische Verbindung des Steckermoduls 20 mit Anschlussleitungen 14 des elektrischen Verbrauchers 12 im explosionsgeschützten Bereich 50 bereitgestellt.

Als Schutzeinrichtung sind bei der Vorrichtung 10 in den Versorgungskreisen 30, 40 jeweils Einrichtungen zur Leistungsbegrenzung 34, 44 sowie in dem gemeinsamen Stecker 20 ein externer Widerstand 26 vorgesehen. Die Einrichtungen zur Leistungsbegrenzung 34, 44 sind als Stromregelungen bzw. Strombegrenzungen ausgebildet, wobei der Spannungsabfall über dem Widerstand 26 in dem Steckermodul 20 ausgewertet wird. Hierzu wird das an der Steckverbindung 23 anliegende Potenzial mit Hilfe von Rückkoppelleitungen 35 bzw. 45 auf die Einrichtungen zur Leistungsbegrenzung 34, 44 zurückgeführt.

Bei der in Fig. 1a gezeigten Ausführungsform wird der Widerstand 26, der den Strom im explosionsgeschützten Bereich 50 begrenzt, gemeinsam genutzt. Dies wird dadurch realisiert, dass der Widerstand 26 nicht in dem Gerät selbst, d.h. nicht in den Versorgungskreisen 30, 40 angeordnet wird, sondern in das Gehäuse des Steckermoduls 20 verlagert wird.

Die Auslastung des Widerstands 26, der zur Strombegrenzung verwendet wird, darf gemäß der Europa-Norm EN 500 20 auch im Fehlerfall hinsichtlich Spannung und Verlustleistung nur 2/3 der im entsprechenden Datenblatt angegebenen Grenzwerte betragen. Um trotz hoher Kanalzahl - beispielsweise beinhaltet der Stecker 20 bei acht Kanälen acht strombegrenzende Widerstände 26 - die ausgelagerten strombegrenzenden Widerstände 26 in einem möglichst kleinen Gehäuse unterbringen zu können, wird die Leistung, die in den Widerständen 26 umgesetzt wird, mit Hilfe der Einrichtungen zur Leistungsbegrenzung 34, 44 elektronisch begrenzt. Diese elektronische Leistungsbegrenzung kann bevorzugt pro Kanal dreifach redundant ausgeführt werden.

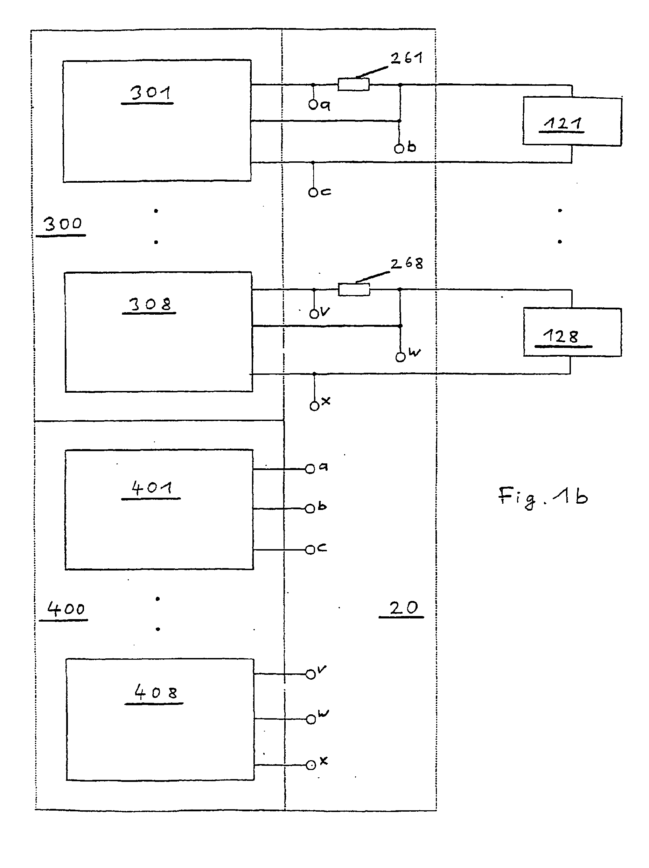

Fig. 1b zeigt schematisch den Aufbau einer mehrkanaligen Ausführung der erfindungsgemäßen Vorrichtung. Eine Mehrzahl von Versorgungskreisen 301 bis 308, 401 bis 408 ist dort von einem Steckermodul 20 aufgenommen. Die Versorgungskreise 301 bis 308 und 401 bis 408, deren Anschlüsse mit a, b, c; v, w, x gekennzeichnet sind, sind dabei gruppenweise zu Versorgungsmodulen 300 bzw. 400 zusammengefasst. Von dem Steckermodul 20 wird eine Mehrzahl von elektrischen Verbrauchern 121 bis 128 im explosionsgeschützten Bereich versorgt. Zur Bereitstellung der Eigensicherheit ist dabei in dem Steckermodul 20 eine Mehrzahl von ohmschen Widerständen 261 bis 268 vorgesehen, wobei jedem Versorgungskreis 301 bis 308 und 401 bis 408 einer der Widerstände 261 bis 268 zugeordnet ist. Durch entsprechende Verschaltung in dem Steckermodul 20 ist der Versorgungskreis 301 mit dem Versorgungskreis 401 parallel geschaltet, d.h. die Anschlüsse a, b und c sind jeweils innerhalb des Steckermoduls miteinander verbunden, was aus Gründen der Übersichtlichkeit in Fig. 1b nicht dargestellt ist. Entsprechend sind die folgenden Versorgungskreise bis zu den Versorgungskreisen 308 und 408 jeweils paarweise zueinander parallel geschaltet. Prinzipiell ist es auch möglich, eine Mehrzahl von Versorgungsmodulen 300, 400, welche jeweils wiederum eine Mehrzahl von Versorgungskreisen umfassen, für ein einziges Steckermodul 20 vorzusehen. Insbesondere können auch mehr als zwei Versorgungskreise parallel geschaltet werden, wodurch die Ausfallsicherheit noch weiter erhöht wird.

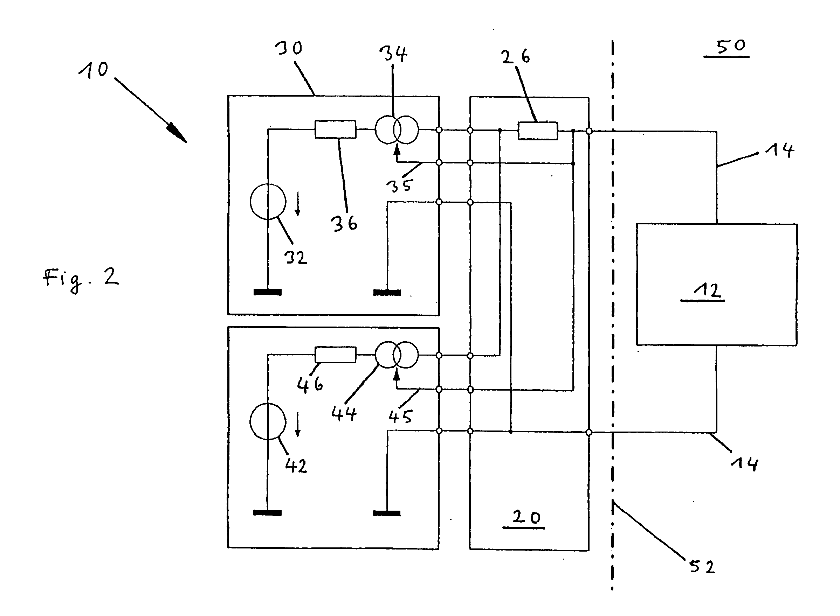

Modifikationen der in Fig. la dargestellten Ausführungsform sind in den Fig. 2 bis 6 dargestellt. Äquivalente Komponenten sind dabei jeweils mit denselben Bezugszeichen gekennzeichnet.

Bei der in Fig. 2 dargestellten Variante wurde, statt des gesamten strombegrenzenden Widerstands, nur ein Teil als gemeinsam wirkender Widerstand 26 in das Steckergehäuse 20 ausgelagert. In jedem der Versorgungskreise 30, 40 ist daher zwischen der Spannungsversorgung 32, 42 und der Einrichtung zur Leistungsbegrenzung 34, 44 ein Widerstand 36, 46 vorgesehen. Durch diese nur teilweise Auslagerung des insgesamt wirkenden strombegrenzenden Widerstands kann die Verlustleistung, die in dem gemeinsamen Stecker 20 umgesetzt wird, reduziert und der Stecker 20 volumenmäßig verkleinert werden.

Bezüglich der Eigensicherheit sind die einen Teil des gesamten Widerstands bildenden Widerstände 36, 46 nur zu 50 % wirksam. Da der Widerstand 26 funktional zu 100 % wirksam ist, ergibt sich bei der Ausgestaltung nach Fig. 2 insgesamt eine Vergrößerung des den Strom begrenzenden Widerstands. Hieraus ergibt sich eine obere Grenze für den Anteil des Gesamtwiderstands der in den Versorgungskreisen 30, 40 verbleiben kann.

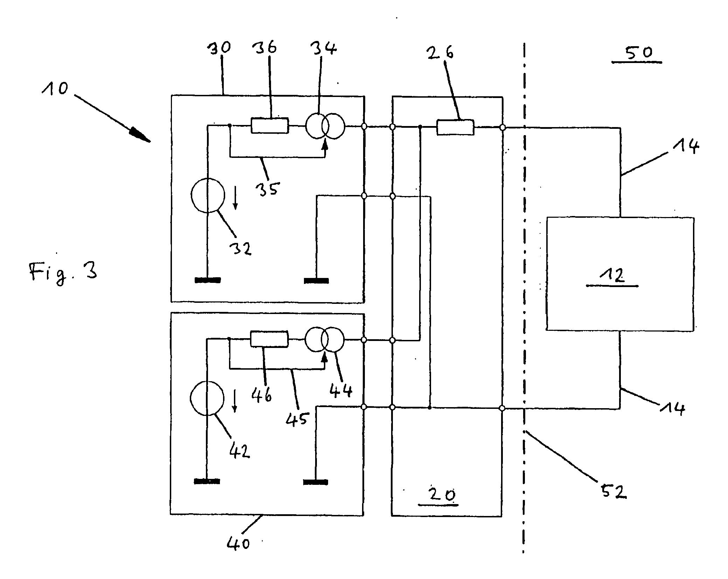

Ist bei einem Gerät der Leistungsumsatz in dem gemeinsamen Steckermodul 20 so niedrig, dass zur Aufrechterhaltung der Eigensicherheit des Widerstands 26 eine Reserve von mindestens 50 % besteht, können die Einrichtungen zur Leistungsbegrenzung 34, 44 auch einen Spannungsabfall über die Widerstände 36, 46 als Eingangsgröße verwenden. Diese Variante ist in Fig. 3 dargestellt. Hierdurch kann pro Kanal eine Verbindung zwischen den Versorgungskreisen 30, 40 und dem Steckermodul 20 entfallen. Allerdings kann im Hinblick auf die Eigensicherheit im Widerstand 26 bei dieser Variante der zweifache Strom, auf den die Einrichtungen zur Leistungsbegrenzung 34, 44 ausgelegt sind, fließen.

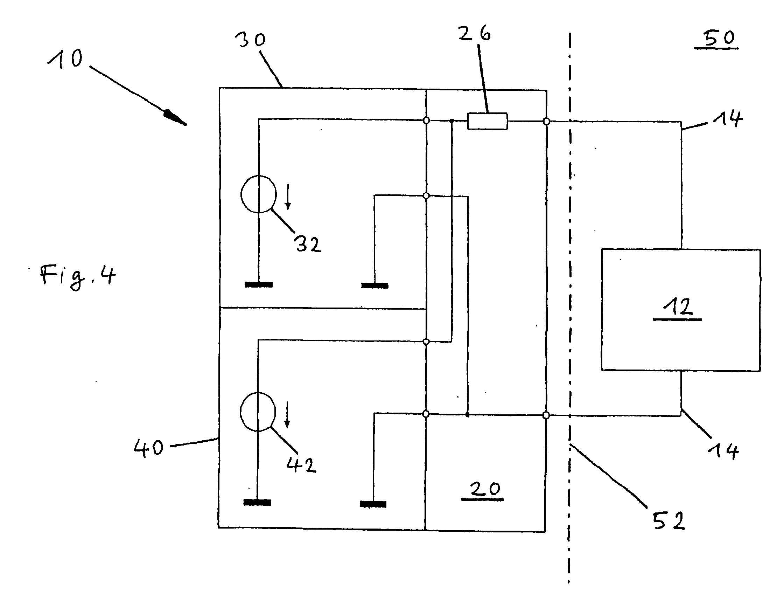

Konstruktiv besonders einfache Ausgestaltungen von Vorrichtungen zur eigensicheren redundanten Strom-Spannungsversorgung sind in den Fig. 4 bis 6 dargestellt.

Die in Fig. 4 dargestellte Ausführungsform lehnt sich an das Ausführungsbeispiel aus Fig. 1a an, wobei aber keine Einrichtungen zur Leistungsbegrenzung 34, 44 vorgesehen sind. Die Eigensicherheit wird bei dieser Variante durch eine geeignete Dimensioneirung des gemeinsamen Widerstands 26, bzw. bei mehrkanaliger Ausführung der Widerstände 261 bis 268 (siehe Fig. 1b), im Steckergehäuse 20 bereitgestellt.

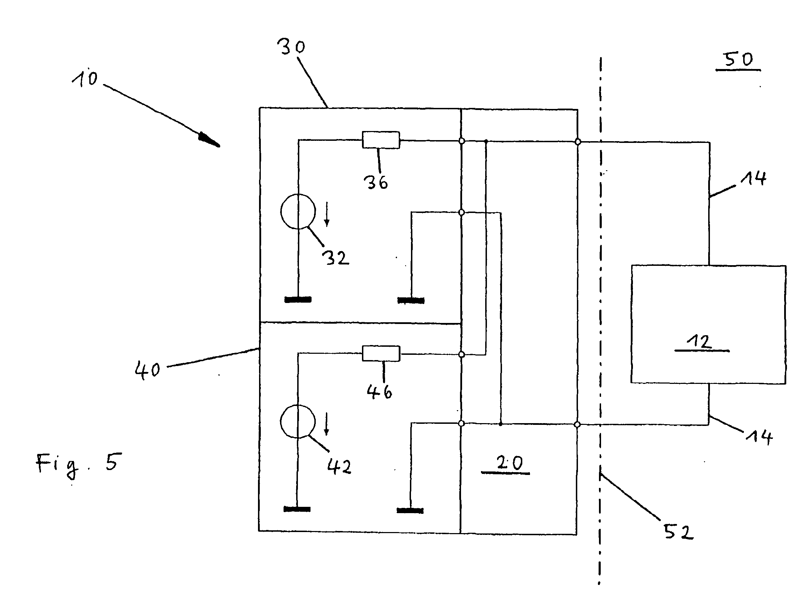

Im Unterschied hierzu sind bei dem Ausführungsbeispiel in Fig. 5 in den Versorgungskreisen 30, 40 jeweils Widerstände 36, 46 vorgesehen, welche im Vergleich zu den entsprechenden Widerständen bei nicht redundanten Versorgungseinrichtungen deutlich, beispielsweise auf mehr als den doppelten Wert, erhöht sind, um den maximal möglichen Strom, beispielsweise im Kurzschlussfall, auf unter 50 % des zulässigen Wertes zu reduzieren.

Bei gegebenem Strom führt die Erhöhung des Widerstands zu einem erhöhten Spannungsabfall. Um dies zu kompensieren, können die Ausgangsspannungen der Spannungsquellen 32, 42 entsprechend erhöht werden. Damit im Leerlauffall diese Spannungen nicht in den explosionsgeschützten Bereich 50 gelangen, kann diese Anhebung der Spannung entweder lastabhängig erfolgen, oder es kann auch eine Spannungsbegrenzung der Klemmenspannung für den Leerlauffall vorgesehen sein.

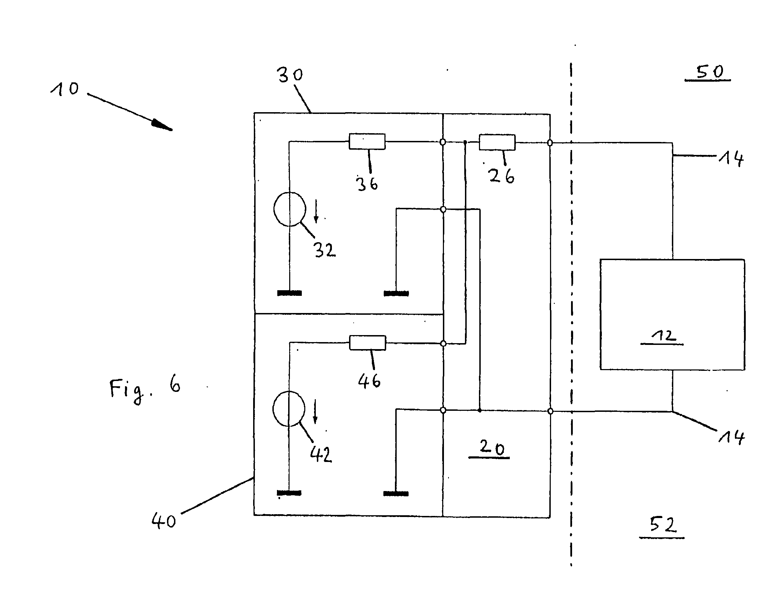

Eine Mischform der in den Fig. 4 und 5 gezeigten Beispiele ist in Fig. 6 gezeigt. Bei dieser Variante wird der insgesamt zur Stromreduzierung wirksame Widerstand einerseits durch die in den Versorgungskreisen 30, 40 vorgesehenen Widerstände 36, 46 und andererseits durch den im Stecker 20 angeordneten gemeinsamten Widerstand 26 gebildet. In diesem Fall sind, ähnlich wie bei dem Ausführungsbeispiel in Fig. 2, die in den Versorgungskreisen 30, 40 liegenden Widerstände 36, 46 nur zu 50 % wirksam, da sie entweder tatsächlich parallel geschaltet sind oder im Hinblick auf das Erfordernis der "Eigensicherheit" als parallel geschaltet angesehen werden müssen. In diesem Fall ist die Verlustleistung, die im Widerstand 26 umgesetzt wird, niedriger als bei dem in Fig. 4 dargestellten Beispiel. Hieraus ergibt sich aber als Vorteil, dass eine Überwachung der am Widerstand 26 abfallenden Leistung nur in Ausnahmefällen erforderlich ist. Weiterhin ist der Spannungsabfall über die Widerstände 36, 46 deutlich geringer als bei dem in Fig. 5 gezeigten Beispiel, so dass eine Anhebung der Leerlaufspannung hier meist nicht erforderlich ist.

Bei sämtlichen in den Figuren gezeigten Ausführungsbeispielen ist das Erfordernis der "Eigensicherheit" auch bei fest parallel geschalteten Versorgungskreisen 30, 40 gewährleistet. Es ist allerdings von Vorteil, eine Umschalteinrichtung zum Umschalten zwischen den einzelnen Kreisen 30, 40 vorzusehen. Es ist dann immer nur ein Versorgungskreis aktiv und der jeweils andere Kreis kann permanent Selbsttests durchführen um sicher zu stellen, dass er betriebsbereit ist. Er wird nur dann eingeschaltet, wenn der erste Versorgungskreis ausgefallen ist.

## Patentansprüche

1. Vorrichtung zur eigensicheren redundanten Strom-Spannungsversorgung für einen oder mehrere elektrische Verbraucher (12) in einem explosionsgeschützten Bereich (50),
(a) mit mindestens zwei Versorgungskreisen (30, 40) zur Bereitstellung der Strom/Spannungsversorgung, und
(b) mit einer Schutzeinrichtung (26, 34, 36, 44, 46) zur eigensicheren Leistungsbegrenzung des von den Versorgungskreisen (30, 40) den Verbrauchern (12) im explosionsgeschützten Bereich (50) zugeführten Stroms,
(c) wobei die Versorgungskreise (30, 40) als Teil der Schutzeinrichtung jeweils Einrichtungen zur Stromregelung und/oder -begrenzung (34, 35, 44, 45) aufweisen,
(d) wobei die Versorgungskreise mit dem Verbraucher (12) oder den Verbrauchern im explosionsgeschützten Bereich (50) über eine gemeinsame Anschlussleitung einzeln oder parallel verbindbar sind und
(e) wobei außerhalb des explosionsgeschützten Bereichs (50) als weiterer Teil der Schutzeinrichtung eine Einrichtung zur resistiven Strombegrenzung (26) in Reihe geschaltet zu den Versorgungskreisen (30, 40) vorgesehen ist,
**dadurch gekennzeichnet,**
(f) **dass** ein Spannungsabfall über die Einrichtung zur resistiven Strombegrenzung (26) von den Einrichtungen zur Stromregelung und/oder -begrenzung erfassbar und zur eigensicheren Versorgung des Verbrauchers oder der Verbraucher bei parallel-aktiven Versorgungskreisen auswertbar ist
oder
(g) **dass** ein Spannungsabfall über in den Versorgungskreisen (30, 40) vorgesehene Widerstände (36, 46) von den Einrichtungen zur Stromregelung und/oder - begrenzung erfassbar und zur eigensicheren Versorgung des Verbrauchers oder der Verbraucher bei parallel-aktiven Versorgungskreisen auswertbar ist.

2. Vorrichtung nach Anspruch 1,
**dadurch gekennzeichnet,**
**dass** die Einrichtung (26) zur resistiven Strombegrenzung wenigstens einen, insbesondere ohmschen, Widerstand aufweist.

3. Vorrichtung nach einem der Ansprüche 1 oder 2,
**dadurch gekennzeichnet,**
**dass** zwischen den Versorgungskreisen (30, 40) und den Anschlüssen (14) des Verbrauchers (12) in dem explosionsgeschützten Bereich (50) ein Steckermodul (20) vorgesehen ist.

4. Vorrichtung nach Anspruch 3,
**dadurch gekennzeichnet,**
**dass** die Parallel-Schaltung der Versorgungskreise (30, 40) in dem Steckermodul (20) ausgeführt ist.

5. Vorrichtung nach einem der Ansprüche 3 oder 4,
**dadurch gekennzeichnet,**
**dass** die Einrichtung (26) zur resistiven Strombegrenzung im Steckermodul (20) zur Begrenzung der Ströme der Versorgungskreise (30, 40) vorgesehen ist.

6. Vorrichtung nach einem der Ansprüche 1 bis 5,
**dadurch gekennzeichnet,**
**dass** zur resistiven Strombegrenzung jedem Versorgungskreis (30, 40) ein entsprechender Widerstand (36, 46) zugeordnet ist.

7. Vorrichtung nach einem der Ansprüche 3 bis 6,
**dadurch gekennzeichnet,**
**dass** die an dem Widerstand der Einrichtung (26) zur resistiven Strombegrenzung abfallende Spannung oder die umgesetzte Verlustleistung auf maximal 2/3 der für den Widerstand zulässigen Grenzwerte ausgelegt ist.

8. Vorrichtung nach einem der Ansprüche 1 bis 7,
**dadurch gekennzeichnet,**
**dass** die Einrichtung (34, 44) zur Stromregelung und/oder -begrenzung mehrfach redundant, insbesondere dreifach redundant, ausgeführt ist.

9. Vorrichtung nach einem der Ansprüche 1 bis 8,
**dadurch gekennzeichnet,**
**dass** die Einrichtungen (34, 44) zur Stromregelung und/oder -begrenzung gemäß der Europa-Norm EN 500 20 ausgelegt sind.

10. Vorrichtung nach einem der Ansprüche 1 bis 9,
**dadurch gekennzeichnet,**
**dass** eine Einrichtung zur Erhöhung der Ausgangsspannung bei Belastung vorgesehen ist.

11. Vorrichtung nach einem der Ansprüche 1 bis 10,
**dadurch gekennzeichnet,**
**dass** eine Einrichtung zur Begrenzung der Ausgangsspannung im Leerlauffall vorgesehen ist.

12. Vorrichtung nach einem der Ansprüche 1 bis 11,
**dadurch gekennzeichnet,**
**dass** zum Umschalten zwischen den Versorgungskreisen eine Umschalteinrichtung vorgesehen ist.

## Claims

1. Device for intrinsically safe, redundant current-voltage supply for one or more electric loads (12) in an explosion-proof area (50),
with at least two supply circuits (30, 40) for providing the current/voltage supply, and with a protective device (26, 34, 36, 44, 46) for intrinsically safe power limitation of the current supplied by the supply circuits (30, 40) to the loads (12) in the explosion-proof area (50), the supply circuits (30, 40) having as part of the protective device in each case current control and/or limiting devices (34, 35, 44, 45), wherein
the supply circuits are individually or parallel-connectable to the load (12) or loads in the explosion-proof area (50) by means of a common connecting lead, and
outside the explosion-proof area (50) as a further part of the protective device a resistive current limiting device (26) is connected in series to the supply circuits (30, 40)
**characterized in that**
a voltage drop across the resistive current limiting device (26) can be detected by the current control and/or limiting devices and evaluated for the intrinsically safe supply of the load or loads in the case of parallel-active supply circuits or that a voltage drop across the resistors (36, 46) provided in the supply curcuits (30, 40) can be detected by the current control and/or limiting devices and evaluated for the intrinsically safe supply of the load or loads in the case of parallel-active supply circuits.

2. Device according to claim 1,
**characterized in that**
the resistive current limiting device (26) has at least one, particularly ohmic resistor.

3. Device according to one of the claims 1 or 2,
**characterized in that**
a plug module (20) is provided between the supply circuits (30, 40) and the terminals (14) of the load (12) in the explosion-proof area (50).

4. Device according to claim 3,
**characterized in that**
the parallel connection of the supply circuits (30, 40) is implemented in plug module (20).

5. Device according to one of the claims 3 or 4,
**characterized in that**
the resistive current limiting device (26) is provided in plug module (20) for limiting the currents of the supply circuits (30, 40).

6. Device according to one of the claims 1 to 5,
**characterized in that**
a corresponding resistor (36, 46) is associated with each supply circuit (30, 40) for resistive current limitation.

7. Device according to one of the claims 3 to 6,
**characterized in that**
the voltage dropping at the resistor of the resistive current limiting device (26) or the converted power loss is designed for a maximum of 2/3 of the limits permitted for the resistor.

8. Device according to one of the claims 1 to 7,
**characterized in that**
the current control and/or limiting device (34, 44) is designed in a multiply and in particular triple redundant manner.

9. Device according to one of the claims 1 to 8,
**characterized in that**
the current control and/or limiting devices (34, 44) are designed according to European standard EN 500 20.

10. Device according to one of the claims 1 to 9,
**characterized in that**
a device for increasing the output voltage in the case of a load is provided.

11. Device according to one of the claims 1 to 10,
**characterized in that**
a device for limiting the output voltage in the case of no-load operation is provided.

12. Device according to one of the claims 1 to 11,
**characterized in that**
a switching device is provided for switching between supply circuits.

## Revendications

1. Dispositif d'alimentation courant-tension redondante à sécurité intrinsèque pour un ou plusieurs consommateurs électriques (12) dans une zone (50) protégée contre les explosions, avec au moins deux circuits d'alimentation (30, 40) pour délivrer l'alimentation courant-tension, et avec un dispositif de protection (26, 34, 36, 44, 46) pour la limitation de puissance à sécurité intrinsèque du courant envoyé par les circuits d'alimentation (30, 40) aux consommateurs (12) dans la zone (50) protégée contre les explosions, les circuits d'alimentation (30, 40) présentant, en tant que partie du dispositif de protection, chacun des dispositifs (34, 35, 44, 45) de régulation et/ou de limitation du courant, et
les circuits d'alimentation peuvent être reliés séparément ou en parallèle au consommateur (12) ou aux consommateurs dans la zone (50) protégée contre les explosions par l'intermédiaire d'une ligne de branchement commune, et en dehors de la zone (50) protégée contre les explosions, en tant qu'autre partie du dispositif de protection, il est prévu un dispositif (26) de limitation résistive du courant, monté en série avec les circuits d'alimentation (30, 40), et **characterisé** en ce que
une chute de tension sur le dispositif de limitation résistive du courant (26) peut être détectée par les dispositifs de régulation et/ou limitation de courant et peut être exploitée pour l'alimentation à sécurité intrinsèque du consommateur ou des consommateurs dans le cas de circuits d'alimentation actifs en parallèle, ou
en ce qu'une chute de tension sur les résistances (36, 46) prévues dans les circuits d'alimentation (30, 40) peut être détectée par les dispositifs de régulation et/ou limitation de courant et peut être exploitée pour l'alimentation à sécurité intrinsèque du consommateur ou des consommateurs dans le cas de circuits d'alimentation actifs en parallèle.

2. Dispositif selon la revendication 1,
**caractérisé en ce que**
le dispositif (26) de limitation résistive du courant présente au moins une résistance, de préférence ohmique.

3. Dispositif selon l'une quelconque des revendications 1 ou 2,
**caractérisé en ce que**
entre les circuits d'alimentation (30, 40) et les branchements (14) du consommateur (12) dans la zone (50) protégée contre les explosions, il est prévu un module à fiches (20).

4. Dispositif selon la revendication 3,
**caractérisé en ce que**
le montage parallèle des circuits d'alimentation (30, 40) est réalisé dans le module à fiches (20).

5. Dispositif selon l'une quelconque des revendications 3 ou 4,
**caractérisé en ce que**
le dispositif (26) de limitation résistive du courant est prévu dans le module à fiches (20) pour limiter les courants des circuits d'alimentation (30, 40).

6. Dispositif selon l'une quelconque des revendications 1 à 5,
**caractérisé en ce que**
pour la limitation résistive de courant, une résistance (36, 46) appropriée est associée à chaque circuit d'alimentation (30, 40).

7. Dispositif selon l'une quelconque des revendications 3 à 6,
**caractérisé en ce que**
la tension chutant sur la résistance du dispositif (26) pour la limitation résistive de courant ou la perte de puissance réalisée est réglée sur au maximum 2/3 des valeurs limites admissibles pour la résistance.

8. Dispositif selon l'une quelconque des revendications 1 à 7,
**caractérisé en ce que**
le dispositif (34, 44) de régulation et/ou limitation de courant est réalisé à redondance multiple, en particulier à triple redondance.

9. Dispositif selon l'une quelconque des revendications 1 à 8,
**caractérisé en ce que**
les dispositifs (34, 44) de régulation et/ou limitation de courant sont réalisés selon la norme européenne EN 500 20.

10. Dispositif selon l'une quelconque des revendications 1 à 9,
**caractérisé en ce que**
il est prévu un dispositif pour augmenter la tension de sortie sous charge.

11. Dispositif selon l'une quelconque des revendications 1 à 10,
**caractérisé en ce que**
il est prévu un dispositif de limitation de la tension de sortie en cas de marche à vide.

12. Dispositif selon l'une quelconque des revendications 1 à 11,
**caractérisé en ce que**
il est prévu un dispositif de commutation pour commuter entre les circuits d'alimentation.
